# EUROPEAN PATENT APPLICATION

(11) **EP 2 938 042 A1**
(43) Date of publication of application: **28.10.2015**
(21) Application number: 15170623.1
(22) Date of filing: 25.01.2012
(51) Int. Cl.: H04L 29/06, H04L 29/08

(54) **METHOD AND APPARATUS FOR AUTOMATICALLY DISCOVERING AND RETRIEVING CONTENT BASED ON CONTENT IDENTITY**

(30) Priority: 25.01.2011 US 201161435968 P; 12.09.2011 US 201161533593 P
(62) Divisional of application: 12703200.1
(71) Applicant: Interdigital Patent Holdings, Inc., Wilmington, DE 19809 (US)
(72) Inventor: Liu, Hang, North Potomac, MD 20878 (US); Defoy, Xavier, Kirkland, Québec H9H 5K5 (CA); Lotfallah, Osama, San Diego, CA 92123 (US); Purkayastha, Debashish, Collegeville, PA 19426 (US); Gazda, Robert G., Spring City, PA 19475 (US); Doken, Serhad, Chester Springs, PA 19425 (US)
(74) Representative: Engdahl, Stefan

(57) **Abstract**

A method and apparatus for automatically discovering and retrieving content based on a content identity (ID) are disclosed. User agents and content control entities in the network interact for registering the content, discovering the content hosts and sources, and initiating and controlling the content session. A content name resolution handler (CNRH) is provided for mapping content IDs to network locations or addresses. Two or more content service provider networks may interconnect each other to discover and retrieve the content. A content request from a client device includes a content ID that uniquely identifies a content object. The content ID is resolved with a CNRH to obtain identity information of at least one content provider for serving the content request, and the content request is forwarded to the selected content provider. The content request may be routed to the selected content provider via IP multimedia subsystem (IMS) control plane entities.

## Description

### CROSS REFERENCE TO RELATED APPLICATIONS

This application claims the benefit of U.S. provisional application Nos. 61/435,968 filed January 25, 2011 and 61/533,593 filed September 12, 2011, the contents of which are hereby incorporated by reference herein.

### BACKGROUND

Traditional data communications in Internet and wireless cellular networks are based on client-server model. The communicating parties establish a relationship, and transmit and receive Internet protocol (IP) packets that contain data and source and destination addresses. The IP packets are transported by the network based on the destination address.

The distribution and delivery of content including multimedia content is dominant use of Internet and mobile networks. The content delivery traffic over Internet and mobile networks will continue to grow in the future. A content object may be available from multiple hosting locations. Multimedia content, for example a video clip, may be in many formats and resolutions. A user device may be able to play multiple formats and have different operating conditions (e.g., bandwidth, processing capability, memory, storage, battery power, etc.). A user is interested in the content itself, rather than the content source location. Furthermore, it would be advantageous if the content is delivered to the user in a proper format that can be efficiently decoded by the user device and at a desirable resolution and best available quality.

While the host-centric model of the Internet has enabled a broad range of network applications and services and enables a host to send data to another host, it is not efficient to support content retrieval functionality. Without specifying a content host location, a user cannot directly retrieve the content. Furthermore, the Internet is content-unaware, thus has no intelligence to cache the content selectively to improve network efficiency.

### SUMMARY

A method and apparatus for automatically discovering and retrieving content based on a content identity (ID) are disclosed. User agents and content control entities in the network interact for registering the content, discovering the content hosts and sources, and initiating and controlling the content session. A content name resolution handler (CNRH) is provided for mapping content IDs to network locations or addresses. Two or more content service provider networks may interconnect each other to discover and retrieve the content across the content service provider network domains. A content request from a client device includes a content ID that uniquely identifies a content object. The content ID is resolved with a CNRH to obtain identity information of at least one content provider for serving the content request. A content provider is selected and the content request is forwarded to the selected content provider. The content request may be routed to the selected content provider via IP multimedia subsystem (IMS) control plane entities.

### BRIEF DESCRIPTION OF THE DRAWINGS

A more detailed understanding may be had from the following description, given by way of example in conjunction with the accompanying drawings wherein:
FIG. 1A is a system diagram of an example communications system in which one or more disclosed embodiments may be implemented;
FIG. 1B is a system diagram of an example wireless transmit/receive unit (WTRU) that may be used within the communications system illustrated in FIG. 1A;
FIG. 1C is a system diagram of an example radio access network and an example core network that may be used within the communications system illustrated in FIG. 1A;
FIG. 2 shows an example process for retrieving content using a content delivery network (CDN);
FIG. 3 shows an example process of peer-to-peer content retrieval initiated by a user agent client (UAC) in accordance with one embodiment;
FIG. 4 shows an alternative process of peer-to-peer content retrieval with content advertisement by a content server in accordance with one embodiment;
FIG. 5 shows an example architecture of a content session control (CSC) network in accordance with one embodiment;
FIG. 6 shows an IP Multimedia Subsystem (IMS) system that is configured to perform content-oriented functionality in accordance with one embodiment;
FIGS. 7A and 7B are an example signaling diagram of message exchanges among network entities wherein a client device with a CSC user agent (UA) discovers and retrieves a content object within an administrative domain in accordance with one embodiment;
FIG. 8 is an example signaling diagram for a content cache/server to publish/register the content objects that it hosts in accordance with one embodiment;
FIG. 9 is another example signaling diagram for a content cache/server to publish/register the content objects that it hosts;
FIG. 10 is an example signaling diagram for establishing a content delivery or streaming session using IMS in accordance with one embodiment;
FIG. 11 is another example signaling diagram for establishing a content delivery or streaming session using IMS in accordance with another embodiment;
FIG. 12 is an example signaling diagram for establishing a content delivery or streaming session in which the network invokes a middle box(es) to provide services and control the content and service access in accordance with one embodiment;
FIG. 13 is an example signaling diagram for establishing a content delivery or streaming session in which the network invokes a middle box(es) to provide services and control the content and service access in accordance with another embodiment;
FIG. 14 shows an example of two or more administrative domains exchanging content information data (CID) through an external registry;
FIG. 15 shows an example network layout wherein a user device retrieves content across domains in accordance with one embodiment;
FIGS. 16A and 16B are an example signaling diagram for retrieving content across multiple domains;
FIG. 17 shows an example network layout wherein a UA retrieves the content across the IMS network domains;
FIG. 18 shows an example of interconnected content name resolution handlers (CNRHs); and
FIG. 19 shows an example of multiple CNRHs forming a distributed hash table (DHT) ring.

### DETAILED DESCRIPTION

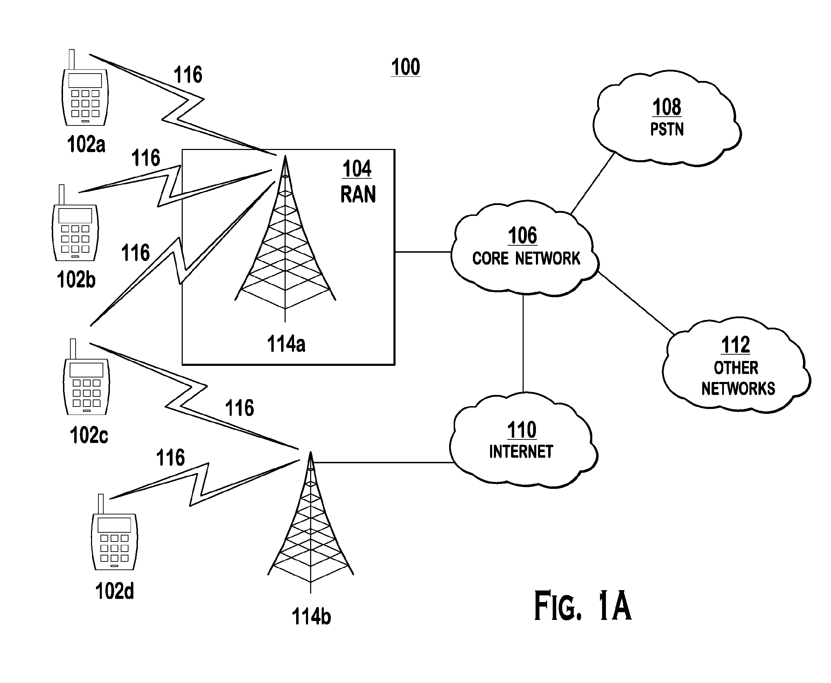

FIG. 1A is a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in FIG. 1A, the communications system 100 may include wireless transmit/receive units (WTRUs) 102a, 102b, 102c, 102d, a radio access network (RAN) 104, a core network 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106, the Internet 110, and/or the networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 116, which may be any suitable wireless communication link (e.g., radio frequency (RF), microwave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A).

In other embodiments, the base station 114a and the WTRUs 102a, 102b, 102c may implement radio technologies such as IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, etc.) to establish a picocell or femtocell. As shown in FIG. 1A, the base station 114b may have a direct connection to the Internet 110. Thus, the base station 114b may not be required to access the Internet 110 via the core network 106.

The RAN 104 may be in communication with the core network 106, which may be any type of network configured to provide voice, data, applications, and/or voice over internet protocol (VoIP) services to one or more of the WTRUs 102a, 102b, 102c, 102d. For example, the core network 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the core network 106 may be in direct or indirect communication with other RANs that employ the same RAT as the RAN 104 or a different RAT. For example, in addition to being connected to the RAN 104, which may be utilizing an E-UTRA radio technology, the core network 106 may also be in communication with another RAN (not shown) employing a GSM radio technology.

The core network 106 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 104 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in FIG. 1A may be configured to communicate with the base station 114a, which may employ a cellular-based radio technology, and with the base station 114b, which may employ an IEEE 802 radio technology.

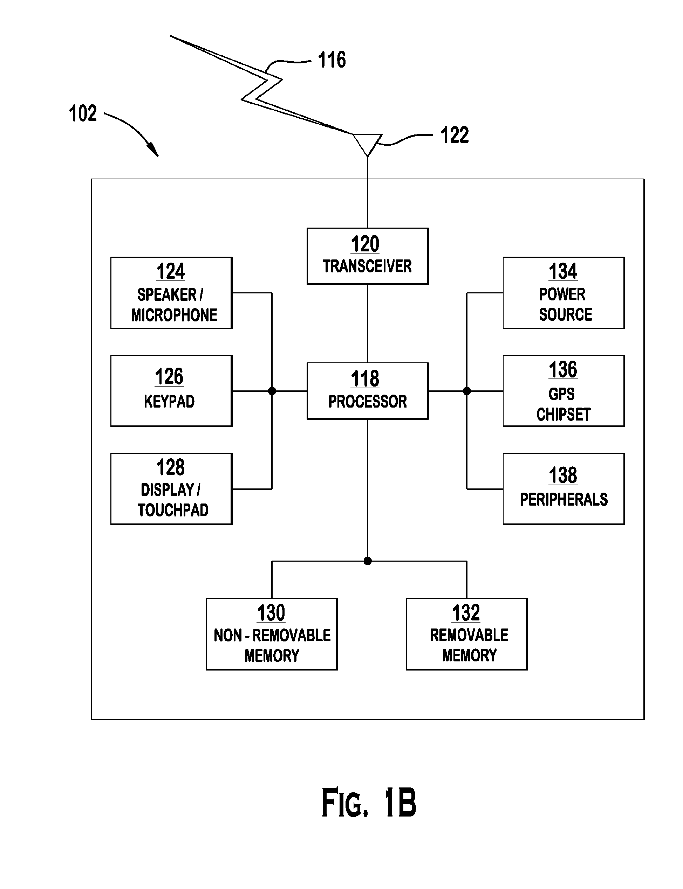

FIG. 1B is a system diagram of an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 106, removable memory 132, a power source 134, a global positioning system (GPS) chipset 136, and other peripherals 138. It will be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 106 and/or the removable memory 132. The non-removable memory 106 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

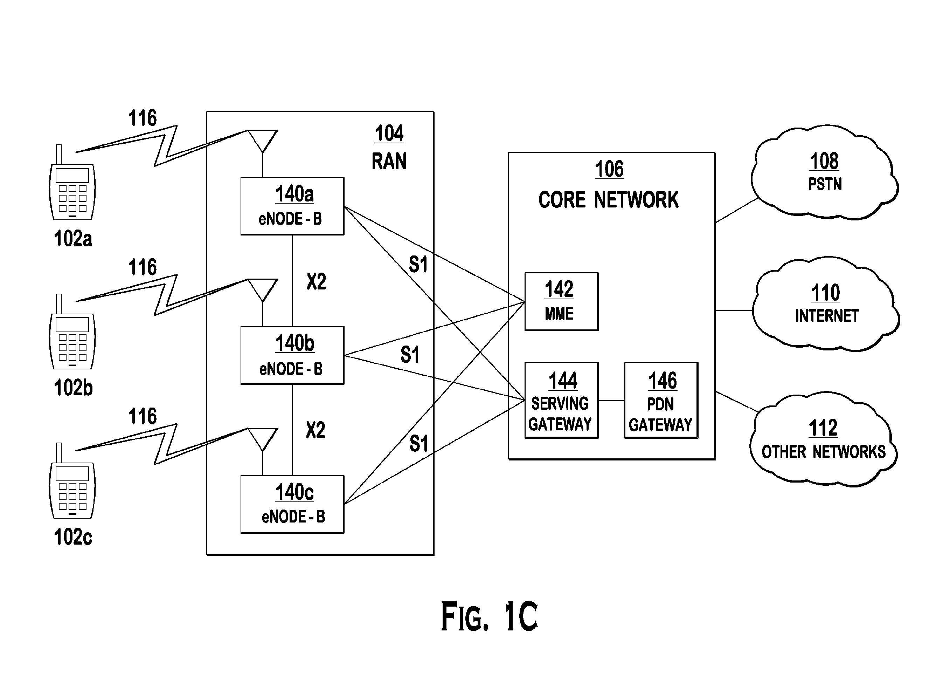

FIG. 1C is a system diagram of the RAN 104 and the core network 106 according to an embodiment. As noted above, the RAN 104 may employ an E-UTRA radio technology to communicate with the WTRUs 102a, 102b, 102c over the air interface 116. The RAN 104 may also be in communication with the core network 106.

The RAN 104 may include eNode-Bs 140a, 140b, 140c, though it will be appreciated that the RAN 104 may include any number of eNode-Bs while remaining consistent with an embodiment. The eNode-Bs 140a, 140b, 140c may each include one or more transceivers for communicating with the WTRUs 102a, 102b, 102c over the air interface 116. In one embodiment, the eNode-Bs 140a, 140b, 140c may implement MIMO technology. Thus, the eNode-B 140a, for example, may use multiple antennas to transmit wireless signals to, and receive wireless signals from, the WTRU 102a.

Each of the eNode-Bs 140a, 140b, 140c may be associated with a particular cell (not shown) and may be configured to handle radio resource management decisions, handover decisions, scheduling of users in the uplink and/or downlink, and the like. As shown in FIG. 1C, the eNode-Bs 140a, 140b, 140c may communicate with one another over an X2 interface.

The core network 106 shown in FIG. 1C may include a mobility management gateway (MME) 142, a serving gateway 144, and a packet data network (PDN) gateway 146. While each of the foregoing elements are depicted as part of the core network 106, it will be appreciated that any one of these elements may be owned and/or operated by an entity other than the core network operator.

The MME 142 may be connected to each of the eNode-Bs 142a, 142b, 142c in the RAN 104 via an S1 interface and may serve as a control node. For example, the MME 142 may be responsible for authenticating users of the WTRUs 102a, 102b, 102c, bearer activation/deactivation, selecting a particular serving gateway during an initial attach of the WTRUs 102a, 102b, 102c, and the like. The MME 142 may also provide a control plane function for switching between the RAN 104 and other RANs (not shown) that employ other radio technologies, such as GSM or WCDMA.

The serving gateway 144 may be connected to each of the eNode Bs 140a, 140b, 140c in the RAN 104 via the S1 interface. The serving gateway 144 may generally route and forward user data packets to/from the WTRUs 102a, 102b, 102c. The serving gateway 144 may also perform other functions, such as anchoring user planes during inter-eNode B handovers, triggering paging when downlink data is available for the WTRUs 102a, 102b, 102c, managing and storing contexts of the WTRUs 102a, 102b, 102c, and the like.

The serving gateway 144 may also be connected to the PDN gateway 146, which may provide the WTRUs 102a, 102b, 102c with access to packet-switched networks, such as the Internet 110, to facilitate communications between the WTRUs 102a, 102b, 102c and IP-enabled devices.

The core network 106 may facilitate communications with other networks. For example, the core network 106 may provide the WTRUs 102a, 102b, 102c with access to circuit-switched networks, such as the PSTN 108, to facilitate communications between the WTRUs 102a, 102b, 102c and traditional land-line communications devices. For example, the core network 106 may include, or may communicate with, an IP gateway (e.g., an IP multimedia subsystem (IMS) server) that serves as an interface between the core network 106 and the PSTN 108. In addition, the core network 106 may provide the WTRUs 102a, 102b, 102c with access to the networks 112, which may include other wired or wireless networks that are owned and/or operated by other service providers.

Hereafter, the terms "user device" and "client device" will be used interchangeably, and include a WTRU. Hereafter, the terms "content ID," "content name," and "object ID" will be used interchangeably.

In Internet, content is delivered to, (e.g., streamed to or downloaded by), an end device either directly from the source server, or indirectly from edge servers in a content distribution network (CDN). By deploying many edge servers strategically located at the edge of the Internet to form an overlay network, the CDN may reduce the transit traffic within the network and shorten the users' start-up delay. The CDN needs a dedicated infrastructure.

Peer-to-peer (P2P) content delivery has emerged as an alternative with a low cost server infrastructure. By utilizing participating users/peers resources, (e.g., upload bandwidth, storage space, processing power, etc.), the amount of available resources in a peer-to-peer system grow in proportion to the number of users/peers.

Web proxy caching is another method to reduce delay and bandwidth usage and balance the traffic load. Web cache proxies may be installed in the Internet service provider networks hierarchically or at the ends of high latency links. A web cache proxy stores copies of content passing through it. Subsequent requests for the stored content may be served from the web cache proxy when they are intercepted by the web cache proxy on route to the source server. Search engines and web browsers may also cache the contents.

Although overlay CDN services and P2P enables location diversity, these approaches incur several disadvantages. They are application-specific and need pre-planning and content management. CDN caching is generally based on a content service provider's business model. A P2P network hosts a limited number of pre-planned content items. They do not support automatic content discovery if a user only provides the content name or content identifier. Each CDN network or each P2P network uses different technologies to name, manage, and distribute the content, forming an isolated island. This makes it difficult to discover and retrieve the content seamlessly and efficiently across different CDN and P2P networks. Web proxy caching does not have the capability of resolving the content location based on the content name within a domain or across domains. A web proxy just forwards the content request toward the origin content server, (i.e., the destination address in the content request), if it does not have the requested content.

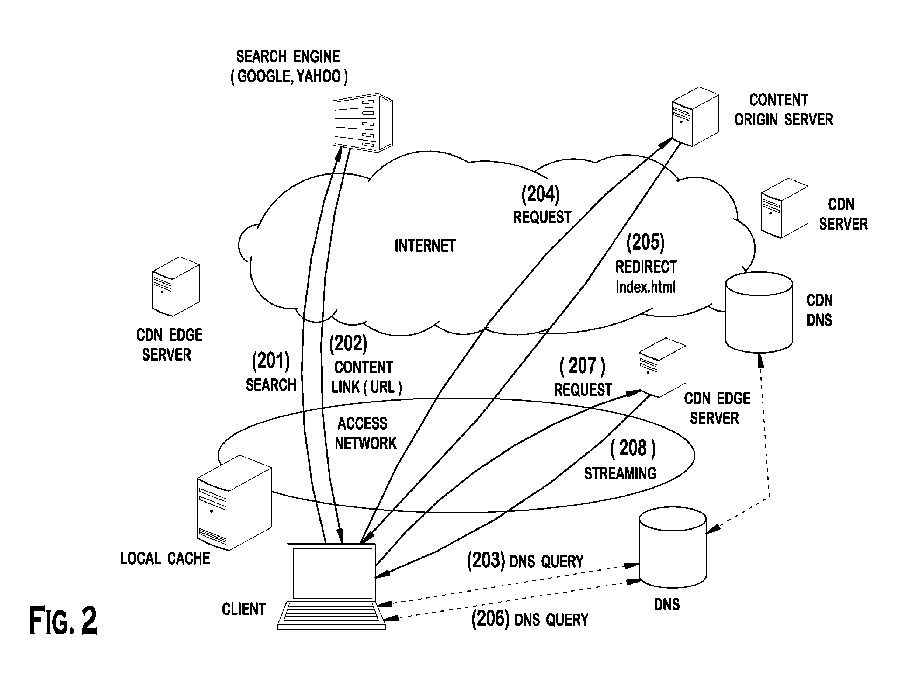

FIG. 2 shows an example process for content retrieving using a CDN network. A user uses a client device with a web browser to search the content by connecting to a search engine (201). The search may be based on keywords, authors, or other information. The search engine returns a uniform resource locator (URL) with the associated link (202). The URL identifies the network location to receive the content and the mechanism for retrieving it, including the domain name of the origin server or the portal, the resource identification of the requested content on the origin server, and the protocol, (e.g., Hyper Text Transport Protocol (HTTP) or Real Time Streaming Protocol (RTSP)), to contact the resource. Steps 201 and 202 may be skipped if a user knows the content URL. The user may input the URL manually to the client device's web browser to retrieve the content.

The user then clicks the link on the client device to retrieve the content, and the client device sends a query of the URL to a domain name server (DNS) to resolve the URL, and the DNS returns the IP address of the origin server to the client device by mapping the domain name of the origin server to its IP address using its database (203).

The client device then sends a content request command toward the origin server of the content (204). The origin server returns a redirect command or a basic index webpage with embedded objects (205). The redirect command and each of the embedded objects in the basic index page contains a URL. This URL points to the CDN provider to serve the content. If the content request command is intercepted by a web cache proxy and a match is found on the web cache proxy, the content may be served from the web cache proxy.

The client device sends a query of the URL to the DNS to resolve the URL received in the redirect command or the embedded objects in the basic index page and receives the IP address of the content server (206). The query is forwarded to the CDN provider's authoritative DNS, and the CDN provider's authoritative DNS allocates a content server for the requesting client device and returns the IP address of the content server to the client device. The client device then sends a request to the content server (207). The client retrieves the content from the content server (208).

In the above CDN approach, the URL represents the network location of the content, (i.e., the origin server of the content), not the content's own name or identifier. There may be a local copy of the requested content which has been cached by a server or a network element in the Internet service provider (ISP) network or by another CDN provider. This local copy may be closer to the client device or have a better network path to the client. However, with the above CDN approach, it is impossible to deliver the requested content to the client from the local copy.

The copy of the content stored in the CDN may not match the current operating conditions (e.g., bandwidth, processing capability, memory, battery power, or the like) of the client device so that the content may not be served in optimum quality. Another copy of the content stored in another location may match the current operating conditions of the client device. However, with the above CDN approach, it is impossible to deliver the requested content to the client from another location. Moreover, a CDN may only host certain content files due to resource limitation. It is desirable to interconnect the content service networks to reach more contents. However, there is no existing technology to support the interconnections or peering of two or more CDN networks.

For P2P content retrieval, a P2P client or a peer that wants to download a content object first obtains a descriptor file for the content. The descriptor file contains metadata about the content to be shared and about a tracker. The tracker is a machine that coordinates the content distribution. The content being distributed is divided into pieces. The metadata in the descriptor contains information about the content such as the piece size, the hash algorithm used to protect the content pieces, etc.

The peer connects to the tracker. The tracker tells the peer from which other peers to download the pieces of the content. The peer establishes connections with other peers and downloads the pieces of the content from other peers. It reports its download status to the tracker. As each peer receives a new piece of the content it becomes a source of that piece to other peers. The peers swarm the pieces of the content among themselves and share the task of distributing the content. A peer acts as a content server and a client.

In the above P2P approach, a peer must first obtain the descriptor file to retrieve the content. The descriptor file is distributed by conventional means, such as web, email, etc. Furthermore, a P2P network may host the retrieval of one or more specific content files depending on the descriptors. With the P2P approach, a client may not retrieve the content automatically by giving the content name or identifier. If a local copy of the content requested by a client is stored in a server or network element that does not join the P2P network, (e.g., belonging to an ISP, CDN provider, or another P2P network), with the above P2P method, it is impossible to deliver the requested content to the client from the local copy even if this local copy is closer to the client device or has a better network path to the client.

A content object, (e.g., data for a video clip, music, movie, document, file, etc.), is given a unique identifier (ID) or name, (hereinafter called "content ID"). The content ID allows decoupling of the content from its source locations so that more efficient and scalable content delivery mechanisms may be achieved. For example, content may be delivered from multiple servers along multiple paths to the destination and dynamic in-network caching may be performed to optimize bandwidth. Furthermore, the content ID may facilitate automatic content discovery. It enables interconnection or peering of multiple content service networks so that more content, and formats and types of a content object, and resources (servers, bandwidth, processing power, storage, etc.) may be available to the users. When a user device requests a content object by giving a content ID, the named content object may be automatically discovered and retrieved to the user device from the network, regardless of the specific physical location of the content.

Content may be named in different ways. For example, content may be named using a value generated by hashing the content file as a content ID, or using a certain naming method to generate the content ID. Alternatively, the content may be named similar to the International Standard Book Number (ISBN) or bar code.

In one embodiment, content may be identified by the following codes/fields: (country/group code)-(publisher code)-(title code)-(check digits)-(format/type code)-(timestamp)-(duration)-(format check digits).

The country/group code is a code assigned to a country or group of countries. The publisher code is a code assigned to a publisher of the content. A publisher may assign the title code to the content. The publisher may be an electronic content publisher, (e.g., Disney), or an electronic content creation service provider. A content creator may request an electronic content creation service provider to assign a title code to the content it created to publish it (this process may be done automatically through a web service).

The check digits may be used for error detection and/or correction, which may be computed from the digits in the country code, the publisher code, and the title code.

The format/type code represents the format or type of the content including file format, encoding format, resolution, etc., (e.g., doc, txt, h.264, mpeg video with 480 x 640 video resolution, etc.). The format/type code may be set to a wild card to represent any format/type of the content.

The timestamp field represents the starting time. The duration field represents the time duration of the video/audio file to play. The timestamp and duration fields represent the temporal domain reference of the content object.

The format check digits may be used for error detection and/or correction of the format/type code, the timestamp field, and the duration field, which may be computed from the digits in the format/type code, the timestamp field, and the duration field.

It should be noted that the above content ID format is an example, and one or more codes or fields may be absent or additional code(s) or field(s) may be added.

A user may initiate a session to retrieve the content using a content ID. If the content ID is unknown, a user may search the content ID based on its title, author, keywords, etc., or use other means to find the content ID.

A user device and a content provider may contain a content session control (CSC) user agent (UA). A CSC UA is a connection end-point used to create or receive CSC messages, publish or register the content, and manage a content retrieval session. A CSC UA may perform the role of a user agent client (UAC) that sends CSC requests or register its content IDs, or a user agent server (UAS) that receives the CSC requests and returns a CSC response as well as publish or advertise its content IDs. These roles of the UAC and the UAS may last for the duration of a CSC transaction. CSC UAs may communicate directly each other to discover and retrieve the content based on the content ID.

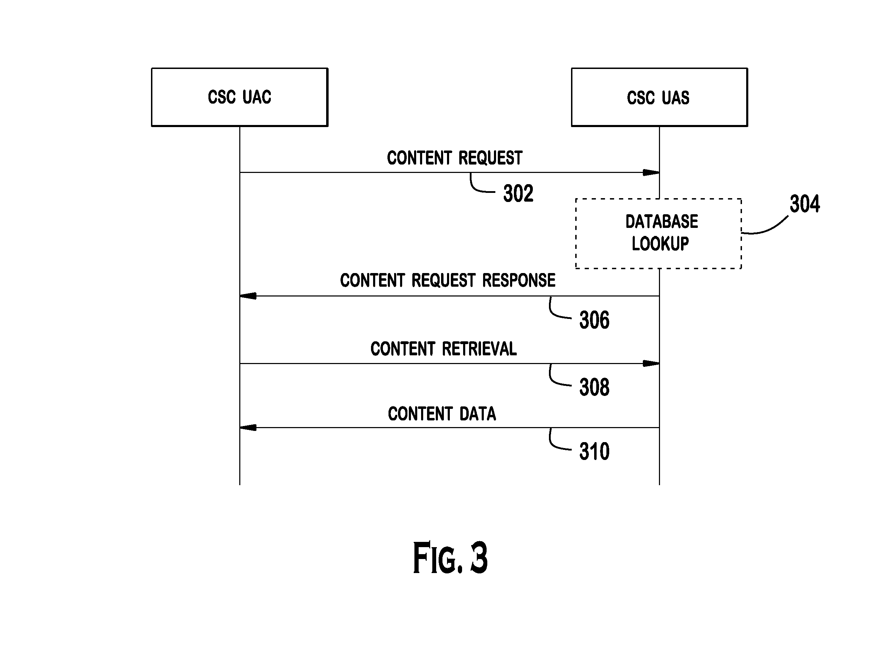

FIG. 3 shows an example process of peer-to-peer content retrieval initiated by a UAC in accordance with one embodiment. A CSC UAC sends a request message with the requested content ID to one or more CSC UAS (302). The request message may be broadcast, multicast, or unicast. The CSC UAS looks up its database (304) and sends a response to the requesting CSC UAC (306). The response contains the information whether the CSC UAS has the requested content and may include the method to retrieve the content (e.g., the URL or server and port, and the protocol used to retrieve the content) if the CSC UAS has the requested content. The CSC UAC sets up a data session based on the CSC UAS response. The CSC UAC sends a content retrieval request to the CSC UAS (308), and receives data from the CSC UAS (310).

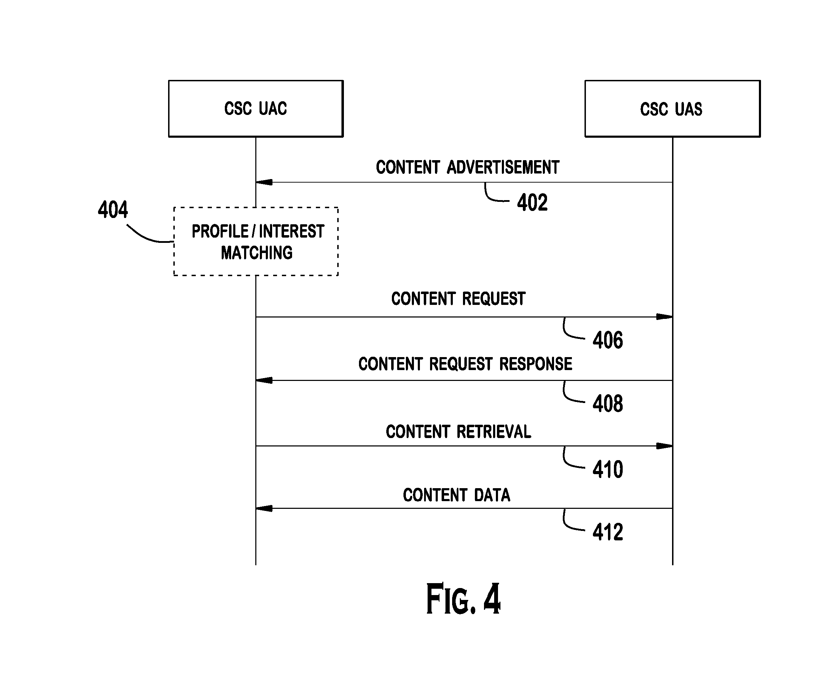

FIG. 4 shows an alternative process of peer-to-peer content retrieval with content advertisement by a content server in accordance with one embodiment. A CSC UAS advertises the contents that it wants to publish using broadcast or multicast messages (402). After receiving the content advertisement message, a CSC UAC determines whether the advertised content matches the profile or interest set by the user (404). If so, the CSC UAC initiates the content retrieval procedure by sending a request message with the requested content ID to the CSC UAS (406). The CSC UAS sends a response to the CSC UAC (408). The CSC UAC receiving the content advertisement message may inform the user of the available contents, and the user may instruct the CSC UAC to initiate the content retrieval procedure. After receiving the response, the CSC UAC sets up the data session based on the CSC UAS response. The CSC UAC sends a content retrieval request to the CSC UAS (410), and receives data from the CSC UAS (412).

Although two or more CSC user agents may communicate without any intervening CSC infrastructure, this may be often limited and may not effectively support content retrieval service in large networks or across multiple networks. A set of control entities may be deployed in the network to support content discovery and retrieval services.

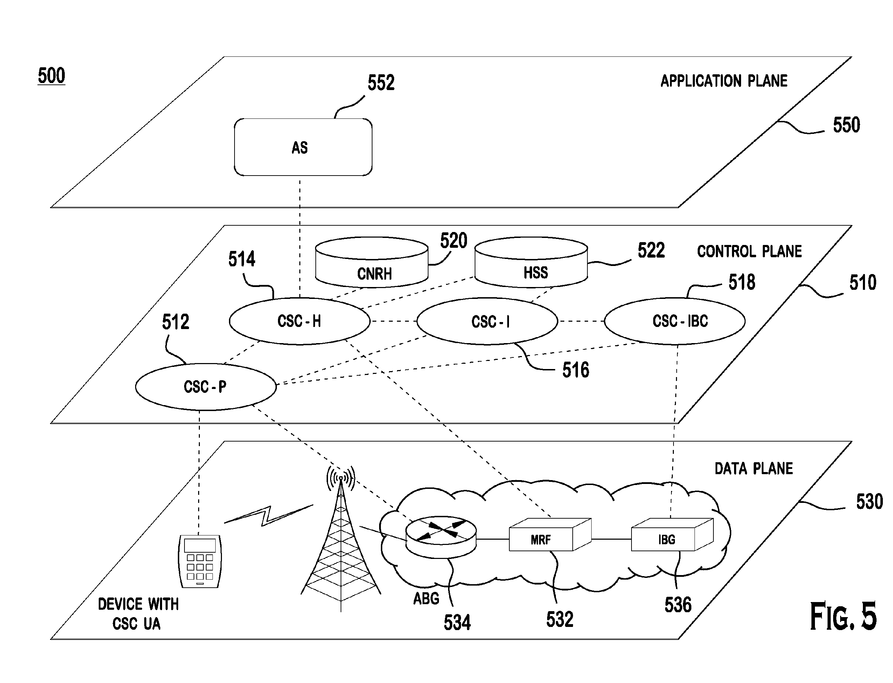

FIG. 5 shows an example architecture of a CSC network 500 in accordance with one embodiment. The network 500 may comprise a control plane 510, a data plane 530, and an application plane 550. The control plane 510 represents the CSC entity network. A device with a CSC agent may register and connect to a CSC network. A network entity, (e.g., home subscription server (HSS)), may be used in the network to perform authentication and authorization of the CSC agent. The data plane 530 represents physical network connections among end devices, servers, routers and other network nodes. The application plane 550 represents the available services and applications in the network.

The control plane 510 may comprise a CSC proxy (CSC-P) 512, a CSC handler (CSC-H) 514, a CSC interrogator (CSC-1) 516, a CSC interconnect border controller (CSC-IBC) 518, a content name resolution handler (CNRH) 520, and a home subscriber server (HSS) 522.

A CSC-P 512 is an intermediary entity that may act as both a CSC server and a CSC client for the purpose of making requests on behalf of other clients. A CSC-P 512 is responsible for providing a secure edge between the user and the network. A CSC-P 512 may forward CSC messages to another entity such as CSC-H 514 and CSC-1 516 in the network for content retrieval. The forwarding may be based on a user agent ID, a message type, a content ID, query of a database, or the like. A CSC-P 512 may be used for user agent authentication and maintaining the security between the user agent and the network. For example, when the CSC-P 512 receives a CSC message from a CSC UA, it may authenticate the message and send the message to the CSC-1 516 or CSC-H 514 that is assigned to handle this CSC-UA during UA registration. Furthermore, a CSC-P 512 may interact with the data plane 530 for data plane resources authorization, (e.g., deep packet inspection, quality of service (QoS) control over the data plane 530, bandwidth management, policy control, security, and resource control, etc.). A UA may discover the CSC-P 512 using Dynamic Host Configuration Protocol (DHCP), proxy advertisement, or other means, or may be configured manually. There may be one or more CSC-Ps in a network.

A CSC-H 514 may handle user agent registration and bind the user location (e.g., the IP address of the device) and the user agent ID. The CSC-H 514 may be responsible for directing signaling requests to application servers so as to invoke services for users on the network 500. When the CSC-H 514 receives a CSC content request, it may invoke the application server(s) 552. The CSC-H 514 may obtain the information from the HSS 522 that identifies which application server(s) need to be invoked when the user agent makes a content request. For example, an application server for a requesting UA may control the advertisement insertion, control user privacy (e.g., an application server may hide the user ID and request content on behalf of the user), or control the user priority to obtain the content.

The CSC-H 514 may handle content registration. The CSC-H 514 may interact with the CNRH 520. The CSC-H 514 may accept the content registration requests from CSC user agents and place the content location information it receives in those content registrations into the CNRH 520.

The CSC-H 514 may provide content ID-based routing services, and resolve the content locations based on the requested content ID using CNRH 520. There may be one or more providers, hosts, sources, or servers of the requested content. The CSC-H 514 may perform a message routing function and decide to which content providers the CSC request message be forwarded to obtain the requested content. The routing may be based on the content ID, requesting user agent location, content location, content format, network conditions, and/or user device profiles. The CSC-H 514 may forward the CSC request message to one or more content providers. The content may be retrieved from one source or multiple sources.

When a CSC-H 514 with the requested content, (i.e., one or more of its associated UAs have the requested content), receives a CSC request message, the CSC-H 514 may invoke an application server(s), such as a content security server. At registration time, the CSC-H handling the requested content may learn the identity of the CSC-P associated with the UA providing content, and forward the CSC request message to the CSC-P. The CSC-P may then send the request to the content provider UA. The content provider UA may send a response and the response may be forwarded on the reverse path. In addition, the CSC-H may control the policy of the network operator through the MRF on the data plane. There may be one or more CSC-Hs or CSC-H instances in a network domain for load distribution and high availability.

A CSC-1 516 controls the process for assigning a CSC-H instance to a UA at registration time. When a UA registers, the registration message is sent to a CSC-1 516 by the CSC-P 512. The CSC-1 516 queries the HSS 522 and the HSS 522 assigns a CSC-H 514 to the user performing registration. The CSC-1 516 may be responsible for forwarding the signaling requests and responses from the originating UA's CSC-H to the destination UA's CSC-H, and is the forwarding point for messages (e.g., registration) from outside. The CSC-1 516 may query the HSS 522 to obtain the identity of the CSC-H to which messages addressed to a particular destination should be sent. There may be one or more CSC-Is or CSC-1 instances in a network domain for load distribution and high availability.

The CNRH 520 maps content IDs to network locations/addresses. A content source with a CSC agent registers its hosted contents to the CNRH 520 through a CSC-H 514. A network node with a CSC agent, (such as a server, a router with caching capability, and an end device, etc.), may also register the content as it dynamically caches the content. The content source or the network node de-registers the content after the content is deleted and is not published anymore.

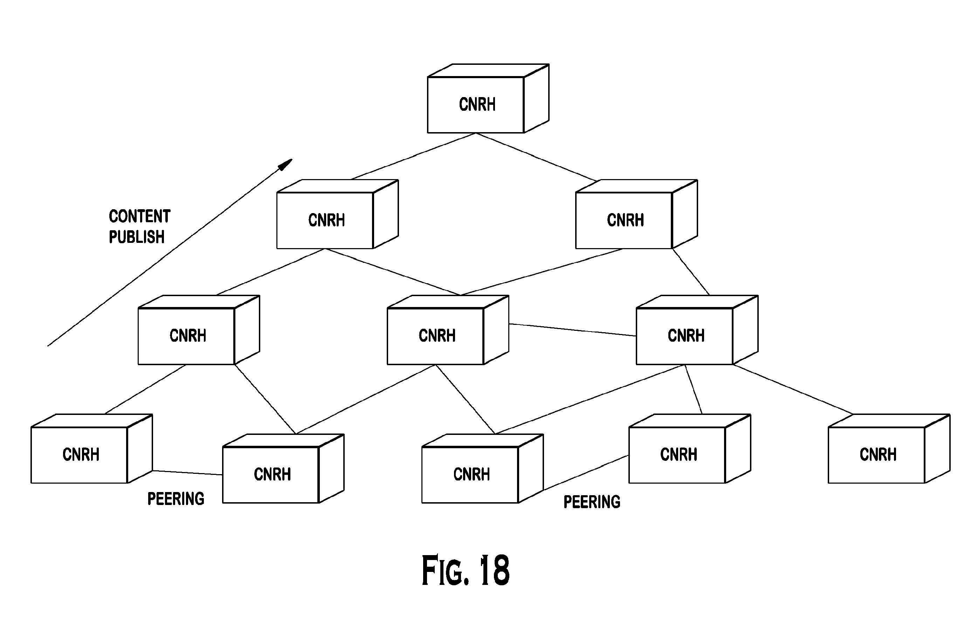

The CNRH 520 may be built upon a distributed database or a centralized database. When distributed database is used, the responsibility of receiving content registration and mapping content IDs to content URLs or content host network addresses is distributed to a set of CNRHs. The CNRHs may be arranged in a hierarchical manner as shown in FIG. 18. An authoritative CNRH server may be assigned to be responsible for its particular network domain, and may assign other CNRH servers for its sub-domains.

The CNRH 520 is different from a DNS. The CNRH 520 is responsible for translating the content IDs to content URLs or content provider's addresses, (e.g., "movie-foo" to a URL, www.host.com/movie-foo.mov). The DNS is to translate a domain name, (e.g., www.example.com to its network address, e.g., 192.0.32.10). The DNS may be extended to handle CNRH functions. An authoritative DNS server may be enhanced to be responsible for handling content registration information and translating content IDs to content URLs and content provider's network addresses for the contents hosted by the network nodes in its sub-domain and domain. After a CSC-H 514 receives a content registration request from a CSC agent in a network domain, it may contact the authoritative CNRH of the network domain, and place the information it receives in the registration into the authoritative CNRH.

Alternatively, the CNRHs may be distributed in a flat topology. As an example, a CSC-H 514 and a CNRH 520 may be integrated together. Each CSC-H 514 contains the CNRH function. The CSC-Hs exchange the content registration information. If a CSC-H 514 receives the content registrations from its CSC UAs, it may aggregate the content registration information and send the aggregated information to other CSC-Hs. Other CSC-Hs learn the content locations.

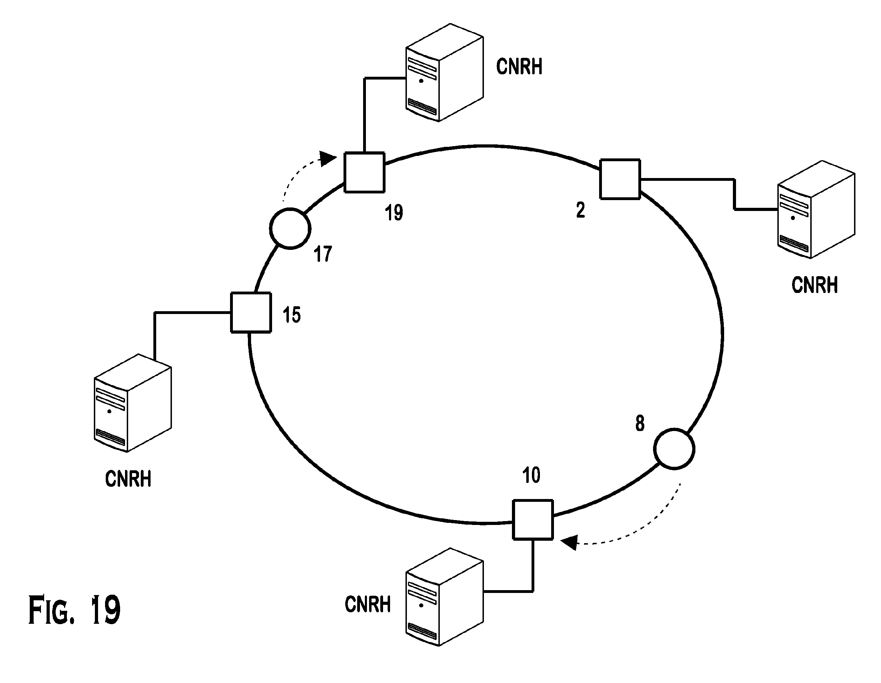

Alternatively, the CNRHs may be connected in a hybrid flat and hierarchical arrangement. For example, multiple CNRHs may form a distributed hash table (DHT) that maps content IDs to CNRH node ID in hash space and provides distributed directory as shown in FIG. 19. In the example of FIG. 19, multiple CNRHs 2, 10, 15, and 19 may form a DHT ring and content object IDs (8 and 17 in this example) may be mapped to CNRH node IDs in hash space, (e.g., content ID 8 is mapped to CNRH 10 and content ID 17 is mapped to CNRH 19 in this example).

A fixed or mobile device may implement the CSC UA function and the CNRH function to serve the other agents to discover and retrieve the content it hosts.

A CSC IBC 518 may be used for content session control at the border with other domains. The CSC IBC 518 may be used to enforce policy on the interconnection media path with other domains.

The data plane 530 may comprise a media resource function (MRF) 532, an access border gateway (ABG) 534, an interconnect border gateway (IBG) 536, etc. The MRF 532 and the ABG 534 may perform content data flow manipulation and management, such as deep packet inspection and modification, content security, media relay, firewall traversal, announcement insertion, media transcoding, data path access control enforcement, etc.

The CSC-P 512, CSC-H 514, and CSC-I 516 are logic entities. They may be implemented on separate hosts or on the same host. The function components (i.e., CSC-P, CSC-H, and CSC-I) in CSC are different from the function components in IMS (i.e., proxy call session control function (P-CSCF), interrogating call session control function (I-CSCF), and serving call session control function (S-CSCF)) or Session Initiation Protocol (SIP). The CSC deals with content based on the content ID. The CSC decouples the content from the content host IP address and URL. The function components in CSC perform content provider registration and content location resolution based on the content ID. In contrast, the IMS and SIP function components have no functions to deal with content. The CSC agent registers the contents it hosts, caches, or wants to publish. An SIP agent or an IMS agent registers its device ID, current IP address and the URL for which it would like to receive calls. In CSC, a content host may publish the contents that it hosts using broadcast or multicast messages. Moreover, in CSC, the control message routing may be based the content ID, and a CNRH is used to map a content ID to one or more content host locations/network addresses. The SIP or IMS may be extended to support the content functions in accordance with embodiments disclosed herein.

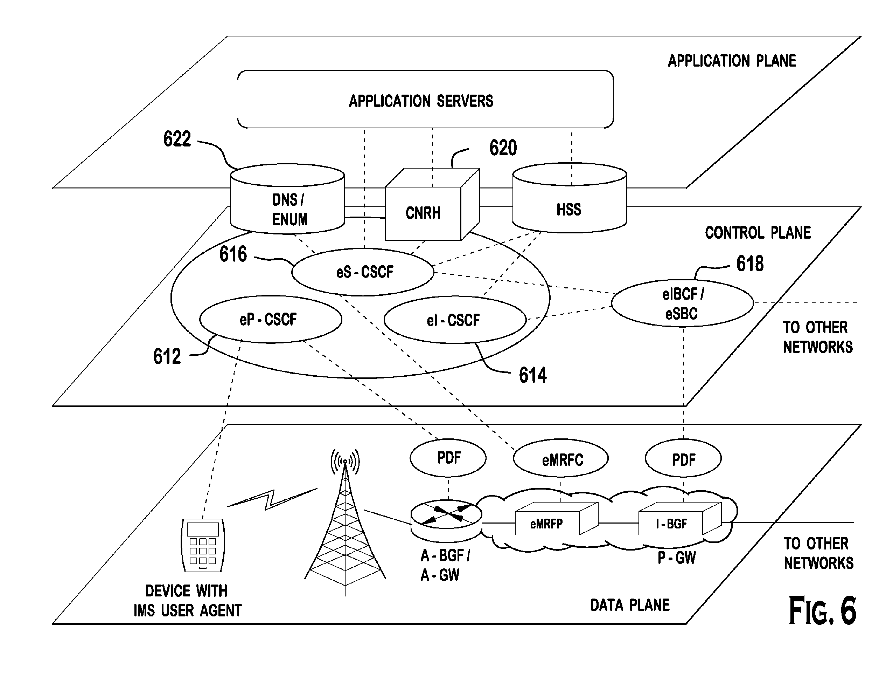

FIG. 6 shows an IMS system that is configured to perform content-oriented functionality in accordance with one embodiment. The IMS system is provided with a CNRH 620 and the conventional IMS entities (i.e., P-CSCF, I-CSCF, S-CSCF, etc.) are enhanced to perform content-oriented functionalities in accordance with the embodiments disclosed herein (i.e., enhanced proxy call session control function (eP-CSCF) 612, enhanced interrogating call session control function (eI-CSCF) 614, enhanced serving call session control function (eS-CSCF) 616, enhanced interconnect border controller function/enhanced session border controller (eIBCF/eSBC) 618, etc. are provided). The "enhanced" means that the IMS entities are enhanced to support content-related signaling in accordance with the embodiments disclosed herein. Each content object is assigned a unique ID to decouple the content identity from its network locations. IMS user agents and IMS network control entities interact for locating and accessing a content object by its object ID (OID) (i.e., content ID) instead of URL or host IP address, routing the control messages within and across network domains, and initiating, negotiating, and controlling content retrieval session. The CNRH 620 maps the requested content ID to URL/host IP address or more general delivery directive. Network elements (e.g., base stations, eNodeBs, gateways, routers, etc.) may cache and publish cached/hosted content objects via enhanced IMS SIP signaling and the CNRH 620. This enables more efficient and scalable content delivery, such as optimizing bandwidth, delivering content from the best location(s) along the best path(s), load balancing, improved latency, and quality of experience (QoE).

The CNRH 620 may be co-located or integrated with enhanced IMS CSCF, implemented as an IMS application server (AS). Alternatively, the CNRH 620 may be implemented by enhancing DNS/Electronic Number Mapping System (ENUM) 622 with CNRH functions.

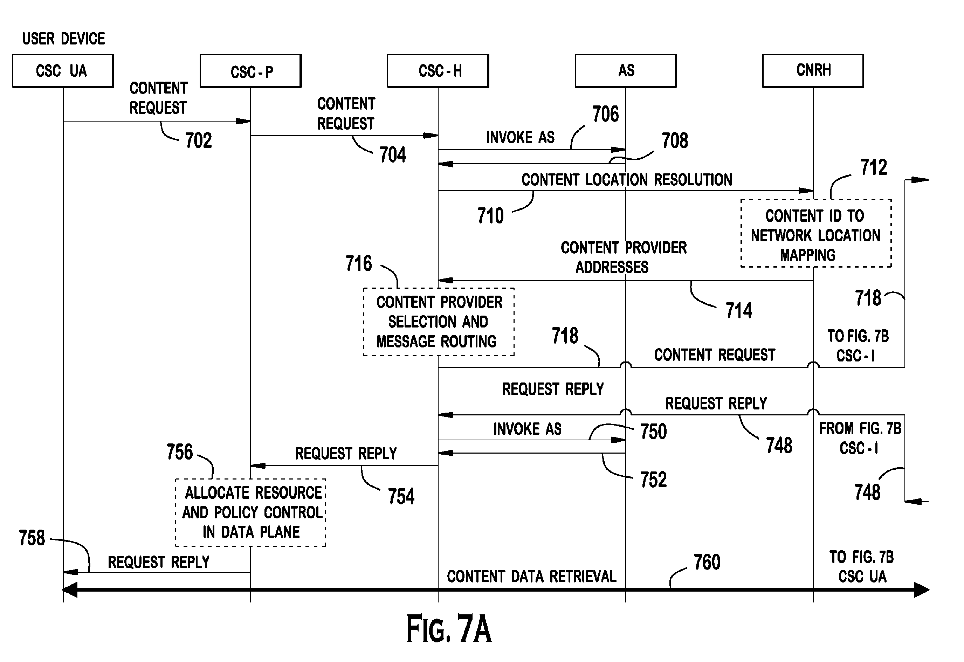

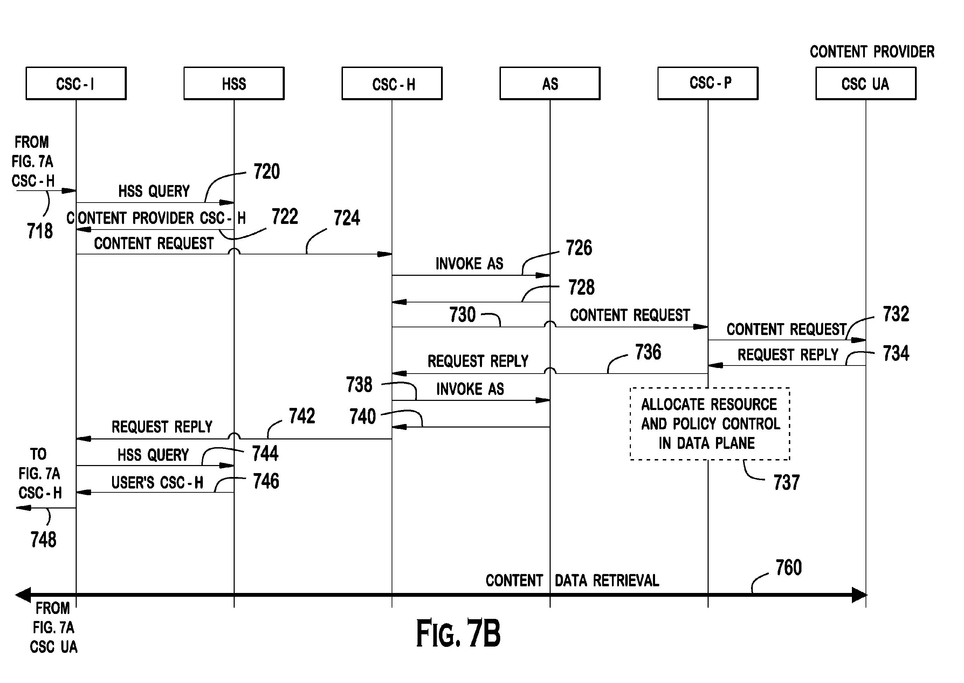

FIGS. 7A and 7B are an example signaling diagram of message exchanges among network entities wherein a client device with a CSC UA discovers and retrieves a content object within an administrative domain in accordance with one embodiment. A user device with a CSC UA (a requesting UA) sends a content request (CREQ) message with a requested content ID to a CSC-P (702). The CSC-P for the requesting UA forwards the content request message to a CSC-H (704).

The CSC-H may invoke an application server, (e.g., an advertisement control server or a user privacy server) (706). The application server sends signaling back to the CSC-H (708). The CSC-H communicates with the CNRH for content location resolution (710). The CNRH looks up its database based on the content request information, such as a content ID (712), and returns the identities of one or more potential content providers for serving the content request as well as other information (such as the provider physical location and retrieval cost, etc.) (714).

The CSC-H uses the information returned from the CNRH to select and determine the content provider(s) to serve this CSC content request (716). Alternatively, the CSC-H may forward the information returned from the CNRH and other content request information to a content session control application server (CSC-AS) (now shown). The CSC-AS may select and determine the content provider(s) to serve this CSC content request, and inform its decision to the CSC-H. The CSC-AS may perform the pre-admission control for the session. The CSC-AS may also determine the session policy, security parameters, resource control parameters, and charging for this content session. The parameters may be used by the data plane components to manipulate the media streams and enforce the policy.

The CSC-H sends a content request to the CSC-1 (718). The CSC-1 queries the HSS to learn the identity of a CSC-H assigned to the content provider (720, 722), and forwards the content request message to the CSC-H for the content provider (724).

The CSC-H handling the content provider may invoke an application server(s), (e.g., a content security server or a content charging server) (726). The AS sends signaling back to the CSC-H (728). The CSC-H handling the content provider forwards the content request message to the CSC-P for the content provider (730).

The CSC-P for the content provider then forwards the content request message to the content provider UA (732). The content provider UA responds the CSC content request with the CSC content request reply (CREP) message (734). The CSC content request reply message contains the information how to set up media content session, such as the protocol and URL for retrieving the media content. The CSC content request reply message is sent to the CSC-P for the content provider.

The CSC-P for the content provider forwards the CSC content request reply message to the CSC-H handling the content provider (736). The CSC-P for the content provider may interact with the ABG to allocate resources for data flow manipulation and management at the content provider side (737). The CSC-H for the content provider may invoke an application server(s) (738). The AS sends signaling back to the CSC-H (740).

The CSC-H for the content provider sends the CSC content request reply to the CSC-1 (742). The CSC-1 queries the HSS to learn the identity of the CSC-H assigned to the requesting UA (744, 746), and forwards the content request reply to the CSC-H for the requesting UA (748).

The CSC-H for the requesting UA may invoke an application server(s) (750). The AS sends signaling back to the CSC-H (752). The CSC-H for the requesting UA forwards the CSC content request reply message to the CSC-P for the requesting UA (754).

The CSC-P interacts with the ABG on the data plane to allocate resources for data flow management such as deep packet inspection, QoS control, bandwidth management, etc. (756). The CSC-P forwards the CSC content request reply message to the requesting user agent (758). The requesting user device retrieves the content based on the information in the content request reply message (760).

It should be noted that the requesting user agent and the content provider may have the same CSC-H and CSC-P or different CSC-Hs and CSC-Ps.

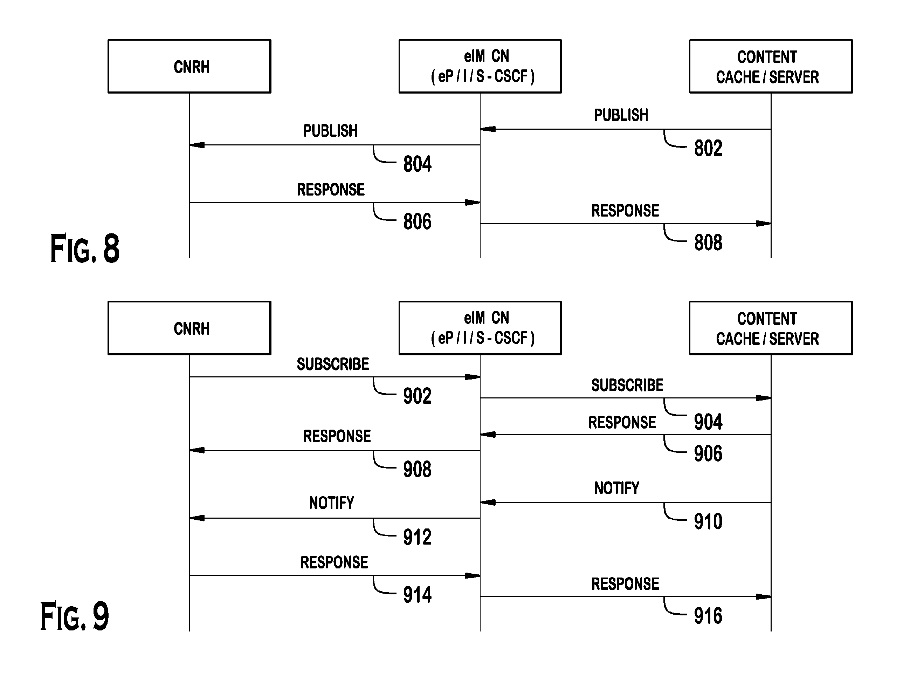

FIG. 8 shows an example signaling diagram for a content cache/server to publish/register the content objects that it hosts in accordance with one embodiment. A content cache/server may include an IMS user agent. Alternatively, a protocol adapter may be used for communications between the content cache/server and the IMS entities. The protocol adapter translates between the IMS protocol and the protocol used by the content cache/server.

A content cache/server that has content objects sends a message (e.g., a SIP PUBLISH or REGISTER message) to its CNRH to register the content objects via an enhanced IMS core network (eIM CN), (i.e., eP-CSCF, eI-CSCF, eS-CSCF) (802, 804). The CNRH may respond to the reception of the PUBLISH or REGISTER message by sending a RESPONSE message to the content cache/server via the eIM CN entities (806, 808). This operation may be repeated when a new content object becomes available at the content cache/server.

FIG. 9 shows another example signaling diagram for a content cache/server to publish/register the content objects that it hosts. A CNRF may send a subscribe message (e.g., a SIP SUBCRIBE message/signal) to a content cache/server via an eIM CN to subscribe to the events of the content cache/server (902, 904). The subscribe message may be routed to the appropriate content cache/server via the eIM CN entities (i.e., eP-CSCF, eI-CSCF, eS-CSCF). The content cache/server may send a response message to the CNRH via the eIM CN (906, 908). The content cache/server may send a message (e.g., SIP NOTIFY) to the CNRH (i.e., the subscriber) when an event of interest occurs, (e.g., a new content object is cached or becomes available) via the eIM CN (9010, 912). The CNRH may respond to the content cache/server a response (e.g., SIP 200 OK) (914, 916). This notification operations may be repeated to notify the CNRF whenever the new event occurs.

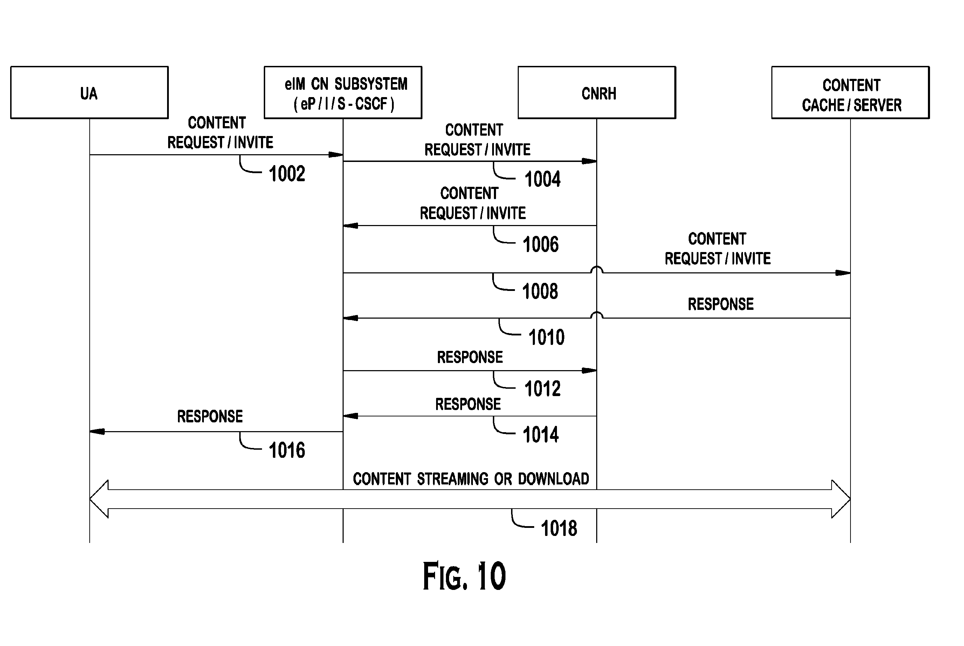

FIG. 10 shows an example signaling diagram for establishing a content delivery or streaming session using the IMS in accordance with one embodiment. A UA sends a content request message (e.g., SIP INVITE) to the CNRH via the eIM CN (1002, 1004). The content request message may include the requested content ID or name. Upon receipt of the content request, the CNRH may examine the requested content ID and determine the content location(s) (e.g., URL or host IP address) and select one or more content cache/server(s). The selection may be made based on the policy, for example, the path quality from the content cache/server to the requested UA, the available storage or memory space, the load and/or available bandwidth of the content cache/server, or the like. The CNRH forwards the content request message toward the selected content cache/server via the eIM CN (1006, 1008). The CNRH may modify the content request message. The IMS entities may also modify the content request message. Upon receiving the content request message, the content cache/server may send a response (e.g., SIP 200 OK) to the CNRH via the eIM CN (1010, 1012). The instruction for obtaining the content object and the session description are included in the response message. The CNRH sends the respond to the US via the eIM CN (1014, 1016). A content streaming or download session is then established between the UA and the content cache/server (1018).

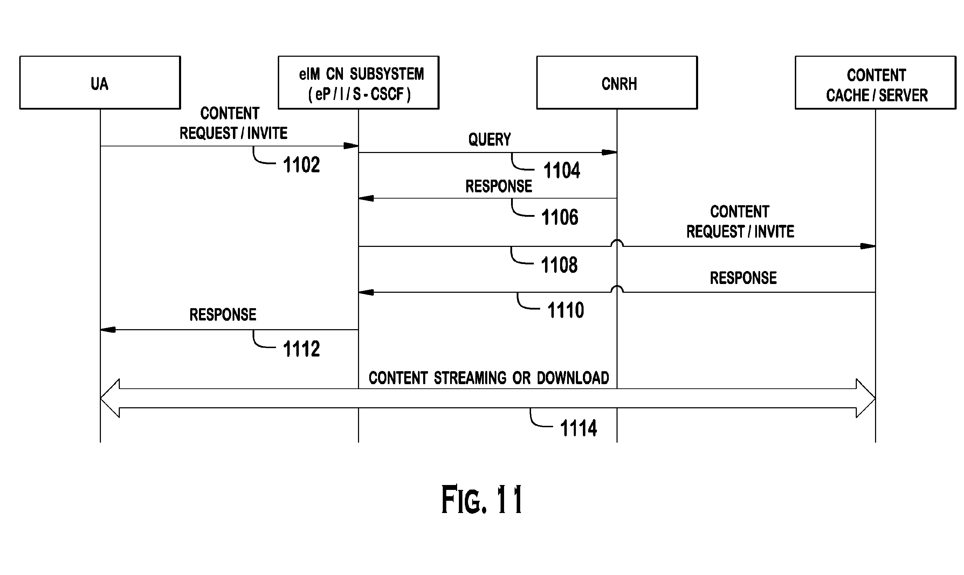

FIG. 11 is another example signaling diagram for establishing a content delivery or streaming session using the IMS in accordance with another embodiment. A UA sends a content request message (e.g. SIP INVITE) to the eIM CN (e.g., S-CSCF) (1102). The request includes the requested content ID or name. The eIM CN entity, (i.e., the querying IMS entity), sends a query message to the CNRH for resolving the location(s) of the requested content object (1104). Upon receipt of request, the CNRH examines the requested content ID and determines the content location(s) (i.e., URL or host IP address) and sends the response to the querying IMS entity (1106). The response includes the location information for the requested content object. The query and response messages may be SIP INVITE and response (e.g., 200 OK) messages, respectively, or use other protocol messages such as HTTP. The querying IMS entity selects one or more content cache/server based on its policy. The IM CN may modify the content request message (e.g., SIP INVITE) and forward the content request message toward the selected content cache/server (1108). Upon receiving the content quest message, the content cache/server sends a response (e.g., SIP 200 OK) to the eIM CN (1110). The instruction for obtaining the content object and the session description are included in the response message. The response message is forwarded to the requesting UA (1112). A content streaming or download session is then established between the UA and the content cache/server (1114).

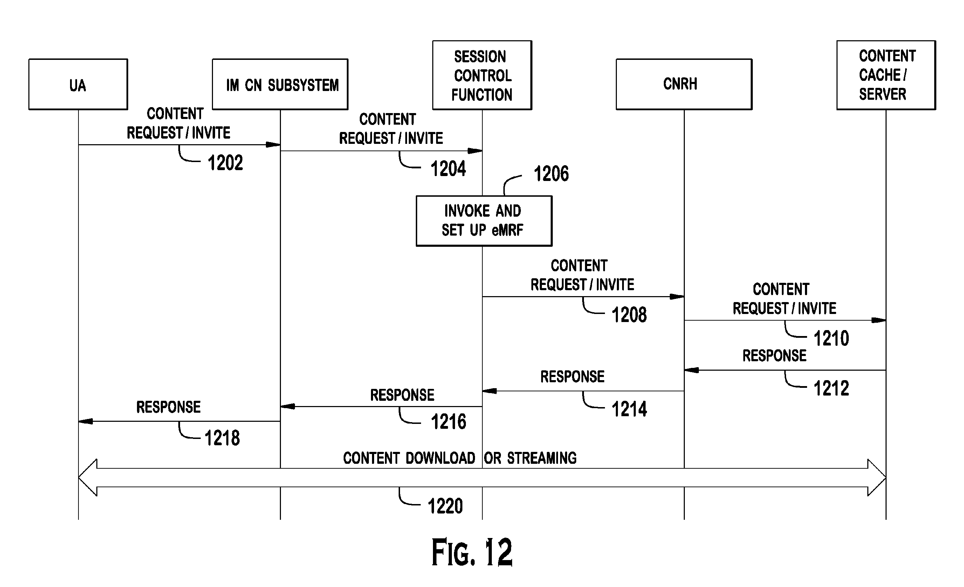

Networks may insert a middle box(es) to provide services, and control content and service access. FIG. 12 shows an example signaling diagram for establishing a content delivery or streaming session in which the network invokes a middle box(es) to provide services and control the content and service access in accordance with one embodiment. A UA sends a content request message (e.g., SIP INVITE) to a session control function (SCF) via the eIM CN (1202, 1204). The content request message may include the requested content object ID. The eIM CN routes the content request message to the SCF entity. Upon receipt of the content request message, the SCF may check the service rights of the requested content service according to the user subscription information. The SCF may invoke and set up enhanced MRF for manipulating content data on the data plane, (e.g., stream mixing, advertisement insertion, transcoding, etc.) (1206). The SCF forwards the content request message to the CNRH (1208). The SCF may modify the content request message before forwarding it to the CNRH. Upon receipt of the content request message, the CNRH may examine the requested content ID, determine the content location(s) (e.g., URL or host IP address), and select one or more content cache/server(s) based on its policy. The CNRH then forwards the content request message to the selected content cache/server (1210). The CNRH may modify the content request. Upon receiving the content quest message, the content cache/server sends a response (e.g. SIP 200 OK) to the CNRH (1212). The instruction for obtaining the content object and the session description may be included in the response message. The CNRH forwards the response message to the SCF (1214), and the SCF forwards the response message to the UA via the eIM CN (1216, 1218). A content streaming or download session is then established between the UA and the content cache/server (1220). The SIP messages between the SCF, the CRNH, and the content cache/server may go through the IMS, and the IMS may modify the messages. The order that the IMS forwards the content request message to the SCF and the CNRH can be swapped.

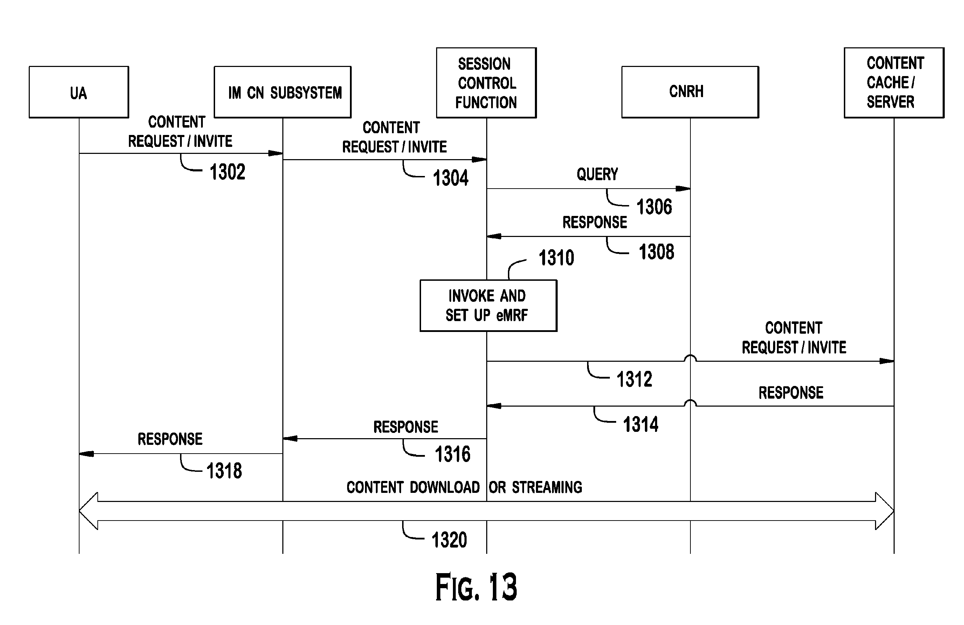

FIG. 13 is an example signaling diagram for establishing a content delivery or streaming session in which the network invokes a middle box(es) to provide services and control the content and service access in accordance with another embodiment. A UA sends a content request message (e.g., SIP INVITE) to an SCF via an eIM CN (1302, 1304). The content request message may include the requested content object ID. Upon receipt of the content request message, the SCF may check the service rights of the requested content service, and send a query message to the CNRH for resolving the location(s) of the requested content object (1306). Upon receipt of the content request message, the CNRH may examine the requested content ID and determine the content location(s) (i.e., URL or host IP address) and send a response to the querying SCF (1308). The response may include the location information for the requested content object. The query and response messages may be SIP INVITE and 200 OK messages, respectively, or use other protocol messages such as HTTP. The SCF may invoke and set up an enhanced MRF for manipulating content data on the data plane, (e.g., stream mixing, advertisement insertion, transcoding, etc.) (1310). The SCF selects one or more content cache/server based on its policy and sends the content request message to the selected content cache/server (1312). The SCF may modify the content request before forwarding it toward the selected content cache/server. Upon receiving the content quest message, the content cache/server sends a response (e.g., SIP 200 OK) to the SCF (1314). The SCF forwards the response to the UA via the eIM CN (1316, 1318). The instruction for obtaining the content and the session description are included in the response message. A content streaming or download session is then established between the UA and the content cache/server (1320). The SIP messages between the SCF, the CRNH, and the content cache/server go through the IMS and the IMS may modify the message.

Two or more content service providers or ISPs may interconnect or peer their network domains to make more content objects and formats as well as resources available. The peering may enable efficient and scalable communication mechanisms, for example, to move content from multiple sources along multiple paths to the destination and automatic caching to optimize bandwidth.

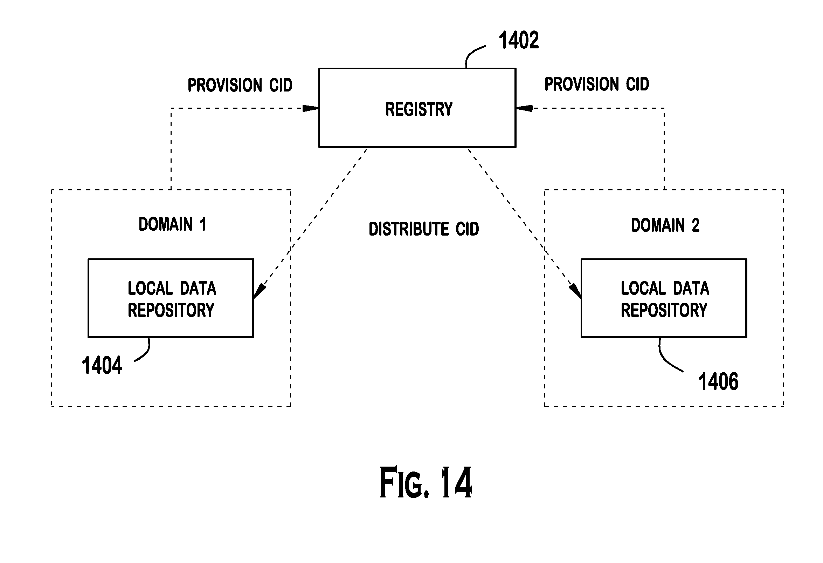

FIG. 14 shows an example of two or more administrative domains exchanging content information data (CID) through an external registry. The external registry 1402 aggregates information data from multiple administrative domains (domains 1 and 2) or multiple information data providers into a single view. It should be noted that although FIG. 14 shows only two domains, it may include more than two domains. The exchanged CID may include aggregated content IDs hosted in the domain, cost to retrieve the content, routing information for CSC control messages, etc. The external registry 1402 collects the CID and maintains a master database in its data repository. The content ID information hosted in a domain may be aggregated to reduce the amount of information and improve the scalability. The registry 1402 may distribute the CID to the local data repository 1404, 1406 in domains. Other methods, (e.g., distributed hash table (DHT)), may be used for maintaining and exchanging CID across domains.

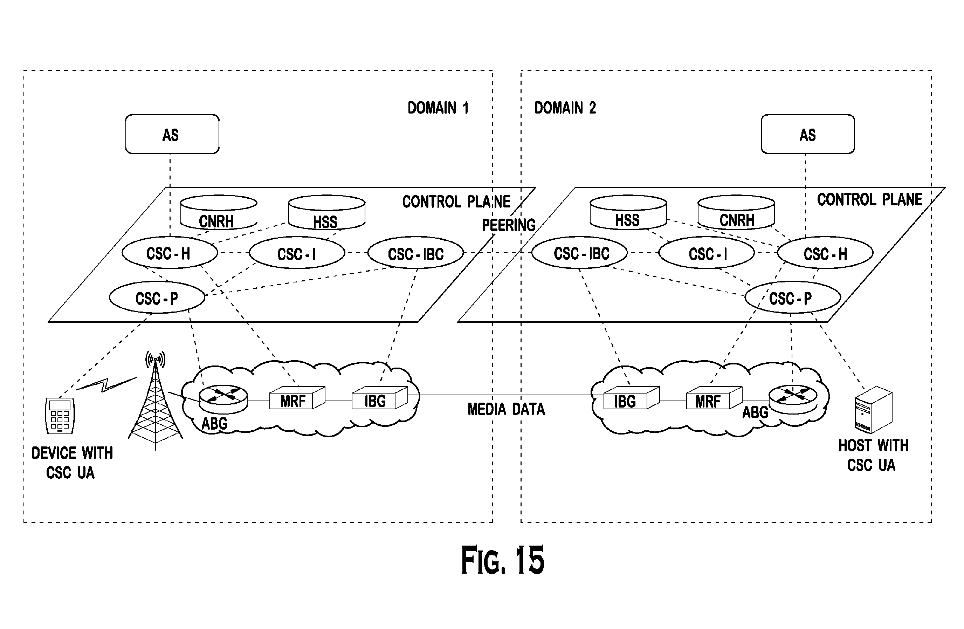

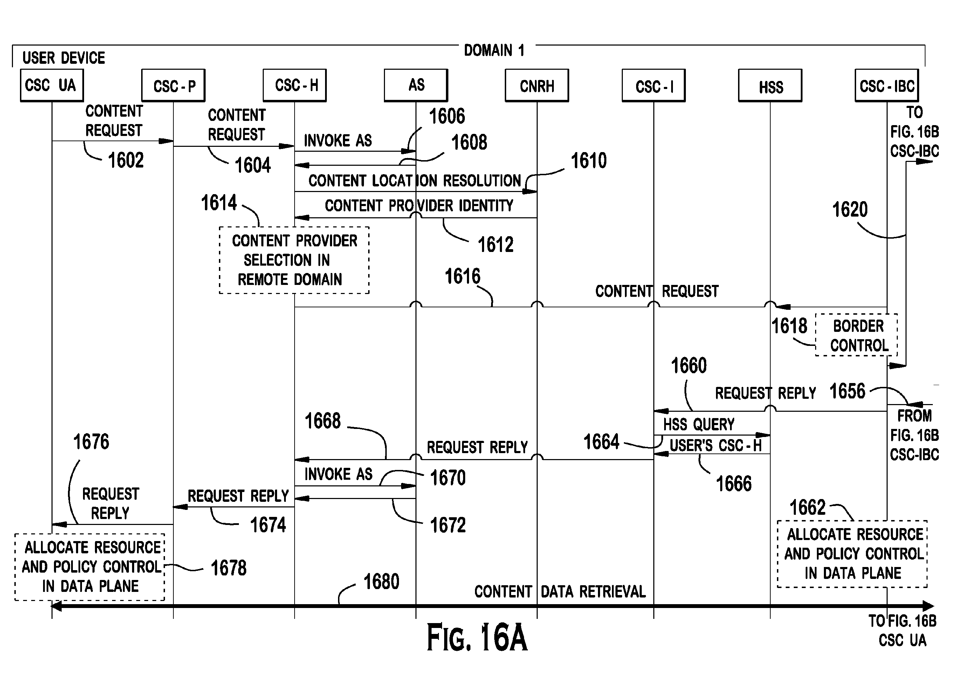

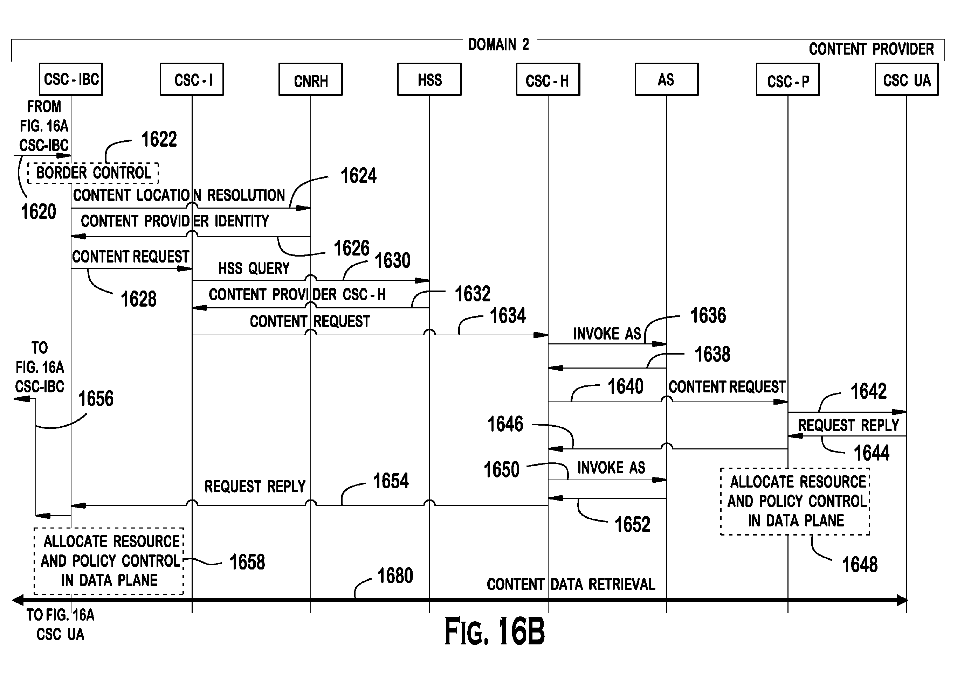

FIG. 15 shows an example network layout wherein a user device retrieves content across domains in accordance with one embodiment. A client device with a requesting CSC UA is located in domain 1, and a content provider is located in domain 2. An example procedure for retrieving content across multiple domains will be explained with reference to FIGS. 16A and 16B.

FIGS. 16A and 16B are an example signaling diagram for retrieving content across multiple domains. A user device with a CSC UA sends a content request (CREQ) message with a requested content ID to a CSC-P for the requesting UA (called a home CSC-P) (1602). The home CSC-P forwards the content request message to a home CSC-H in the user home domain (i.e., domain 1 in this example) (1604).

The home CSC-H may invoke an application server(s), (e.g., an advertisement control server or a user privacy server) (1606). The application server may send signaling back to the home CSC-H (1608). The home CSC-H communicates with the home CNRH in domain 1 (1610). The home CNRH returns the identities of one or more potential content providers for serving this content request as well as other information, such as the provider physical location and retrieval cost, etc. by looking up its data base according to the content request information such as content ID (1612). The home CSC-H uses the information returned from the home CNRH to select and determine the content provider(s) to serve this CSC content request (1614). The home CSC-H may select the content provider in a target domain (domain 2 in this example) to serve this CSC content request and the way to route the content request message for establishing the content retrieval session. Alternatively, the home CSC-H may forward the information returned from the home CNRH and other content request information to a home CSC-AS (not shown). The home CSC-AS may select and determine the content provider(s) to serve this CSC content request and inform its decision to the home CSC-H. The home CSC-AS may perform the pre-admission control for the session. The home CSC-AS may exchange and negotiate the session policy, security parameters, resource control parameters, and charging for this content session with the remote CSC-AS through the CSC-H if the content provider is in a remote domain. The parameters may be used by the data plane components to manipulate the media streams and enforce the policy.

The home CSC-H sends the CSC request to the home CSC-IBC in the home domain if the content provider is in another domain (1616). The home CSC-IBC may perform session border control (1618). The home CSC-IBC sends the CSC content request to the remote CSC-IBC in the target domain (domain 2 in this example) (1620).

The remote CSC-IBC in the target domain processes the CSC request for security and policy control, admission control, and media plane resource authorization (e.g., QoS control, policy enforcement, bandwidth management, etc.) (1622). The remote CSC-IBC may determine the specific content provider to serve this content request by interacting with the remote CNRH (since the internal network may be hidden from the outside world) (1624, 1626). Alternatively, the remote CSC-IBC may forward the information returned from remote the CNRH and other content request information to a remote CSC-AS (not shown). The remote CSC-AS may determine the content provider to serve this CSC content request and inform its decision to the remote CSC-IBC. The remote CSC-AS may also perform the admission control for the session. The remote CSC-AS may also exchange and negotiate the session policy, security parameters, resource control parameters, and charging for this content session with the home CSC-AS through the CSC-IBC.

The remote CSC-IBC sends the CSC content request to the remote CSC-1 in the target domain (1628). The remote CSC-1 queries the remote HSS in the target domain to learn the identity of the remote CSC-H assigned to the content provider (1630, 1632), and forwards the CSC content request message to the remote CSC-H for the content provider (1634).

The remote CSC-H handling the content provider may invoke an application server(s), for example, a content security server or a content charging server (1636). The application server sends signaling back to the remote CSC-H (1638). The remote CSC-H handling the content provider forwards the CSC request message to the remote CSC-P for the content provider (1640). The remote CSC-P then forwards the CSC request message to the content provider UA (1642).

The content provider UA in the remote domain responds the CSC content request with the CSC content request reply (CREP) message (1644). The CSC content request reply message may contain information how to set up media content session, such as the protocol and URL for retrieving the media content. The CSC content request reply message is sent to the remote CSC-P for the content provider.

The remote CSC-P for the content provider forwards the CSC content request reply message to the remote CSC-H handling content provider (1646). The remote CSC-P may interact with the ABG to allocate resource for data flow manipulation and management in the remote domain (1648).

The remote CSC-H may invoke an application server(s) (1650). The application server sends signaling back to the remote CSC-H (1652). The remote CSC-H for the content provider sends the CSC content request reply to the remote CSC-IBC (1654). The remote CSC-IBC forwards the request reply to the home CSC-IBC (1656). The remote CSC-IBC may interact with the remote CSC-IBG to allocate resource and policy control in the data plane (1658).

The home CSC-IBC sends the request reply to the home CSC-1 (1660). The home CSC-IBC may interact with the home CSC-IBG to allocate resource and policy control in the data plane (1662). The home CSC-1 queries the home HSS to learn the identity of the home CSC-H assigned to the requesting UA (1664, 1666), and forwards the content request reply to the home CSC-H for the requesting user agent (1668).

The home CSC-H for the requesting UA may invoke an application server(s) (1670). The application server sends signaling back to the home CSC-H (1672). The home CSC-H for the requesting UA forwards the CSC content request reply message to the home CSC-P for the requesting UA (1674).

The home CSC-P forwards the CSC content request reply message to the requesting user agent (1676). The CSC-P may interact with the access border gateway on the data plane to allocate resource for data flow management such as deep packet inspection, QoS control, bandwidth management, etc. (1678).

The requesting user device retrieves the content based on the information in the content request reply message (1680).

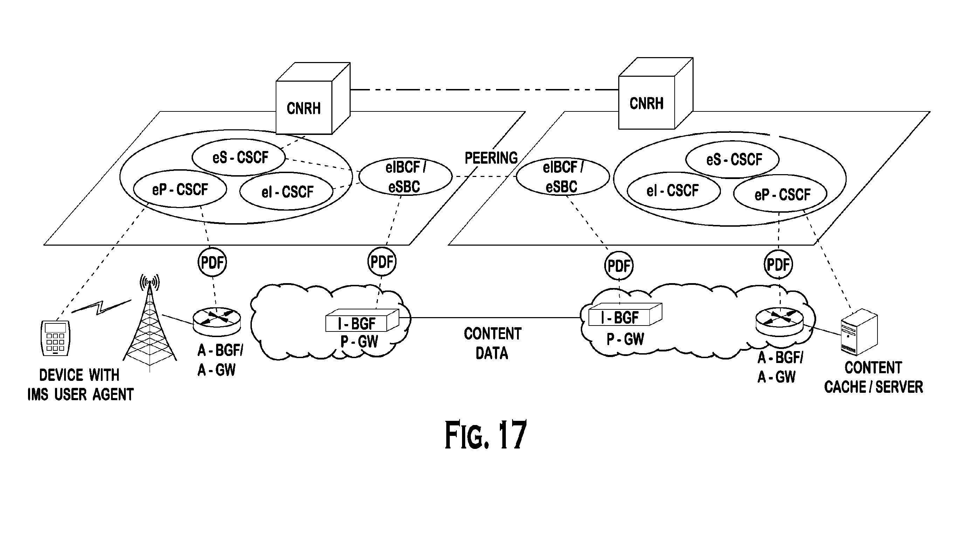

FIG. 17 shows an example network layout wherein a UA retrieves the content across the IMS network domains. A CNRH is provided in each IMS network and the IMS entities such as P-CSCH,

FIG. 18 shows an example hierarchical tree of interconnected CNRHs. The CNRHs of different network domains may form a hierarchical tree with peered links that maps to the Internet hierarchy. Content publish messages propagate up along the hierarchy and among peers. Each CNRH may maintain the location information of all the content objects published in its descendants and peers. The location information for a copy of content object includes the mapping of the content ID to next-hop CNRH and the distance or cost to the host of this content object copy. A content object may have multiple copies located at different locations. The location information of the closest copy for a content object in terms of the number of CNRH hops to the host of the content object copy may be maintained by a CNRH. Alternatively, a CNRH may maintain the location information of the copy with the minimum cost to the content host according to its policy. Alternatively, multiple entries of the location information for a content object, each entry corresponding to a copy, may be maintained by a CNRH.

A CNRH forwards the content request (e.g., SIP INVITE) toward the closest copy (host) across network domains, or toward the copy with minimum cost, or toward multiple copies according to its policy. The host of the content object copy may send a response message (e.g., SIP 200 OK) upon receiving the content request message (e.g., SIP INVITE). The instruction for obtaining the content object and the session description may be included in the response message. The response message is forwarded back to the origin of the content request across the network domains. A content download or streaming data session is then established and the data packet exchanges are performed. If a CNRH does not have the location information for the requested content object upon reception of a content request, it forwards the content request to its parent CNRH. If the content request travels up to the highest-level/root CNRH but does not find the location information of the requested content object, the root CNRH may respond an error message. The error message is forwarded back to the origin of the content request across the network domains.

In an alternative embodiment, the CNRHs may form a hierarchical DHT or another topology. The content publish messages propagate among the CNRHs to publish the location information of the content objects across network domains. The content request message (e.g., SIP INVITE) is forwarded among the CNRHs to locate the host of a copy of the requested content object across the network domains. The inter-domain SIP messages go through the IMS and IBCF/SBC in each domain to enforce security and inter-domain policies.

### Embodiments.

1. A method for discovering and retrieving content.
2. The method of embodiment 1 comprising receiving a content request from a client device.
3. The method of embodiment 2 wherein the content request includes a content ID that uniquely identifies a content object.
4. The method as in any one of embodiments 2-3, further comprising resolving the content ID with a CNRH to obtain identity information of at least one content provider for serving the content request.
5. The method of embodiment 4 further comprising selecting a content provider.
6. The method of embodiment 5 further comprising forwarding the content request to the selected content provider.
7. The method as in any one of embodiments 2-6, further comprising invoking an application server in response to receipt of the content request.
8. The method as in any one of embodiments 2-7, further comprising querying a home subscriber server to determine a network entity serving the selected content provider, wherein the content request is forwarded to the determined network entity.
9. The method as in any one of embodiments 2-8, further comprising receiving a content request reply containing information how to set up a media content session for retrieving the content object.
10. The method of embodiment 9 further comprising forwarding the content request reply to the client device.
11. The method as in any one of embodiments 9-10, further comprising querying a home subscriber server to determine a network entity serving the client device, wherein the content request reply is forwarded to the determined network entity.
12. The method as in any one of embodiments 9-11, further comprising interacting with a network entity on a data plane to allocate resources for data flow management upon receipt of the content request reply.
13. The method as in any one of embodiments 2-12, further comprising sending the content request to an IBC entity in a home domain of the client device on a condition that the content provider is not located in the home domain.
14. The method of embodiment 13 further comprising performing a session border control and forwarding the content request to an IBC entity in a target domain where the content provider is located.
15. The method as in any one of embodiments 4-14, further comprising forwarding the information received from the CNRH to an application server, wherein the application server selects the content provider for serving the content request.
16. The method as in any one of embodiments 2-15, wherein the content request is routed to the selected content provider via IMS control plane entities.
17. The method of embodiment 16 further comprising a session control entity in IMS receiving the content request.
18. The method of embodiment 17 further comprising the session control entity querying the CNRH.
19. The method of embodiment 18 further comprising the session control entity receiving the identity information from the CNRH.
20. The method of embodiment 19 further comprising the session control entity sending the content request toward the content provider.
21. The method of embodiment 16 further comprising a session control entity in IMS receiving the content request.
22. The method of embodiment 21 further comprising the session control entity forwarding the content request to the CNRH.
23. The method of embodiment 22 further comprising the CNRH selecting the content provider and sending the content request toward the selected content provider.
24. The method as in any one of embodiments 2-23, further comprising the CNRH receiving a registration message for the content object from a content provider.
25. The method of embodiment 24 further comprising the CNRH registering the content object.
26. The method as in any one of embodiments 24-25, further comprising the CNRH sending a subscribe message to the content provider to subscribe to an event of the content provider.
27. The method of embodiment 26 further comprising the CNRH receiving the registration message on a condition that a subscribed event occurs.
28. A method for discovering and retrieving content.
29. The method of embodiment 28 comprising sending a content request including a content ID.
30. The method of embodiment 29 wherein the content ID uniquely identifies a content object and is resolved via a CNRH to identity information of at least one content provider for serving the content request.
31. The method as in any one of embodiments 29-30, further comprising receiving a content request reply.
32. The method of embodiment 31, further comprising setting up a media session and retrieving the content object based on the information in the content request reply.
33. The method as in any one of embodiments 29-32, further comprising receiving a content advertisement message indicating contents to publish.
34. The method of embodiment 33, further comprising determining whether the contents in the content advertisement message matches a profile set by a user, wherein the content request is sent on a condition that the contents in the content advertisement matches the profile.
35. A network for supporting discovery and retrieval of content based on a content ID.
36. The network of embodiment 35 comprising a CNRH configured to resolve a content ID to identity information of at least one content provider for serving a content request.
37. The method of embodiment 36 further comprising a network entity configured to receive from a client device the content request including the content ID, select a content provider for serving the content request, and forward the content request to the selected content provider.
38. The network of embodiment 37, wherein the network entity is an entity in an IMS control plane.
39. The network as in any one of embodiments 37-38, wherein the network entity is further configured to invoke an application server in response to receipt of the content request.
40. A user device for discovering and retrieving content.
41. The user device of embodiment 40 comprising a processor configured to send a content request including a content ID, the content ID uniquely identifying a content object and being resolved via a CNRH to identity information of at least one content provider for serving the content request.
42. The user device of embodiment 41, wherein the processor is further configured to receive a content request reply, and set up a media session and retrieve the content object based on the information in the content request reply.
43. The user device as in any one of embodiments 41-42, wherein the processor is further configured to receive a content advertisement message indicating contents to publish, and determine whether the contents in the content advertisement message matches a profile set by a user, wherein the content request is sent on a condition that the contents in the content advertisement matches the profile.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method for discovering and retrieving content, the method comprising:
receiving a content request from a client device, the content request including a content identity, ID, that uniquely identifies a content object;
resolving the content ID with a content name resolution handler, CNRH, to obtain identity information of at least one content provider for serving the content request; and
forwarding the content request to a selected content provider.

2. The method of claim 1 further comprising:
invoking an application server in response to receipt of the content request.

3. The method of claim 1 further comprising^{:}
querying a home subscriber server to determine a network entity serving the selected content provider, wherein the content request is forwarded to the determined network entity.

4. The method of claim 1 further comprising:
receiving a content request reply containing information how to set up a media content session for retrieving the content object; and
forwarding the content request reply to the client device.

5. The method of claim 4 further comprising^{:}
querying a home subscriber server to determine a network entity serving the client device, wherein the content request reply is forwarded to the determined network entity.

6. The method of claim 4 further comprising^{:}
interacting with a network entity on a data plane to allocate resources for data flow management upon receipt of the content request reply.

7. The method of claim 1 further comprising^{:}
sending the content request to an interconnect border control, IBC, entity in a home domain of the client device on a condition that the content provider is not located in the home domain; and
performing a session border control and forwarding the content request to an IBC entity in a target domain where the content provider is located.

8. The method of claim 1 further comprising^{:}
forwarding the information received from the CNRH to an application server, wherein the application server selects the content provider for serving the content request.

9. The method of claim 1 wherein the content request is routed to the selected content provider via IP multimedia subsystem, IMS, control plane entities.

10. A method for discovering and retrieving content, the method comprising:
sending a content request including a content identity, ID, the content ID uniquely identifying a content object and being resolved via a content name resolution handler, CNRH, to identity information of at least one content provider for serving the content request;
receiving a content request reply; and
setting up a media session and retrieving the content object based on the information in the content request reply.

11. The method of claim 10 further comprising:
receiving a content advertisement message indicating contents to publish;
and
determining whether the contents in the content advertisement message matches a profile set by a user, wherein the content request is sent on a condition that the contents in the content advertisement matches the profile.

12. A network for supporting discovery and retrieval of content based on a content identity, ID, the network comprising:
a content name resolution handler, CNRH, configured to resolve a content ID to identity information of at least one content provider for serving a content request; and
a network entity configured to receive from a client device the content request including the content ID, select a content provider for serving the content request, and forward the content request to the selected content provider.

13. The network of claim 12 wherein the network entity is an entity in an IP multimedia subsystem, IMS, control plane.

14. The network of claim 12 wherein the network entity is further configured to invoke an application server in response to receipt of the content request.

15. A user device for discovering and retrieving content, the user device comprising:
a processor configured to send a content request including a content identity, ID, the content ID uniquely identifying a content object and being resolved via a content name resolution handler, CNRH, to identity information of at least one content provider for serving the content request; and
the processor further configured to receive a content request reply, and set up a media session and retrieve the content object based on the information in the content request reply;
the processor further configured to receive a content advertisement message indicating contents to publish, and determine whether the contents in the content advertisement message matches a profile set by a user, wherein the content request is sent on a condition that the contents in the content advertisement matches the profile.
